# EUROPEAN PATENT APPLICATION

(11) **EP 2 348 728 A2**
(43) Date of publication of application: **27.07.2011**
(21) Application number: 10195098.8
(22) Date of filing: 15.12.2010
(51) Int. Cl.: H04N 7/18

(54) **Image transmission system**

(30) Priority: 21.01.2010 JP 2010011170
(71) Applicant: Tomy Company, Ltd., Tokyo 124-8511 (JP)
(72) Inventor: Omae, Takeshi, Tokyo 124-8511 (JP)
(74) Representative: HOFFMANN EITLE

(57) **Abstract**

The present invention is directed to enabling image display at a high resolution according to connection of an external device 13 including a display environment having a higher resolution than that of a display specification of a receiver 3 itself. An encoder 5 compresses a captured image output from a camera 4 in either one of a QVGA mode and a VGA mode. A decoder 9 expands the compressed image input via sending and receiving circuits 6 and 8, and generates a QVGA expanded image from the compressed image in the QVGA mode while generating a VGA expanded image from the compressed image in the VGA mode. A QVGA display unit 11a displays the QVGA expanded image. A USB interface 12 outputs the VGA expanded image outward. When the external device 13 is not connected, the captured image is compressed in the QVGA mode, so that the QVGA expanded image is displayed on the QVGA display unit 11a. When the external device 13 is connected, the captured image is compressed in the VGA mode, so that the VGA expanded image is displayed on a VGA display unit 13a via the USB interface 12.

## Description

### BACKGROUND OF THE INVENTION

### 1. Field of the Invention

The present invention relates to an image transmission system in which an image captured on the side of a transmitter is displayed on the side of a receiver in real time.

### 2. Description of the Related Art

Conventionally, an image transmission system in which an image captured on the side of a transmitter is displayed on the side of a receiver, e.g., a baby monitor and an interphone, has been proposed. For example, Patent Document 1 discusses a system including a portable terminal and an abnormality notification device that can communicate with each other by radio. In this system, the abnormality notification device detects a change in the surrounding environment of an infant or a change in the physical condition thereof, and sends an abnormality notification signal to the portable terminal by radio when it detects an abnormality. Patent Document 2 discusses a system including a camera for capturing an image of an infant and various types of sensors for detecting the state of the infant and periodically sending image information obtained by the camera and sensor information obtained by the sensors to a management server. In this system, the management server stores the received image information and sensor information while putting a baby book on a website so that the growth process of the infant can be browsed, and notifies, when an abnormality is detected, a terminal previously designated of the abnormality.

Patent Document 3 to 5 discuss image transmission systems for changing a frame rate according to an image to reduce a data amount of an image to be transferred. More specifically, Patent Document 3 discusses the point that a movement amount of an image to be transferred is detected, and a time release image and a thinned image are correspondingly transferred. Patent Document 4 discusses the point that only a portion to be paid attention to in an image corresponding to one frame is transmitted at a high image quality, and the other portion is transmitted at a low image quality. Further, Patent Document 5 discusses the point that a captured image is compressed in a high compression ratio to transfer data in a low frame rate when a camera is not in focus, while being compressed in a low compression ratio to transfer data in a high frame rate when the camera is in focus.

Patent Document 1: Japanese Patent Application Laid-Open No. 10-11674
Patent Document 2: Japanese Patent Application Laid-Open No. 2002-149909
Patent Document 3: Japanese Patent Application Laid-Open No. 10-66074
Patent Document 4: Japanese Patent Application Laid-Open No. 2000-217108
Patent Document 5: Japanese Patent Application Laid-Open No. 2006-33160

In the above-mentioned conventional image transmission system, the resolution of an image sent from a transmitter to a receiver is always constant in many cases depending on a display specification of the receiver itself. Even if the resolution of a camera on the side of the transmitter is 300,000 pixels, for example, an image is transferred by being compressed into Quarter Video Graphic Array (QVGA) (320 × 240 = 76800 pixels) on the side of the transmitter if the display size on the side of the receiver that attaches importance to portability is approximately 2.4 inches. Even if a personal computer or the like including a display environment having a higher resolution is connected, therefore, it is difficult to display an image at a higher resolution without degrading its image quality.

The present invention is directed to enabling image display at a high resolution depending on connection of an external device including a display environment having a higher resolution than a display specification of a receiver itself.

### SUMMARY OF THE INVENTION

To be solved the above mentioned problem, this invention provides an image transmission system having a camera, an encoder, a sending circuit, a receiving circuit, a decoder, a first display unit, an output interface, and a mode switching circuit. The camera outputs a captured image in a time-series order. The encoder compresses the captured image output from the camera in either one of a first compression mode and a second compression mode having a higher resolution than that of the first compression mode. The sending circuit sends the image compressed by the encoder. The receiving circuit receives the compressed image sent from the sending circuit. The decoder expands the compressed image received by the receiving circuit, and generates a first expanded image from the compressed image in the first compression mode while generating a second expanded image higher in resolution than the first expanded image from the compressed image in the second compression mode. The first display unit displays the first expanded image. The output interface outputs the second expanded image outward. The mode switching circuit instructs the encoder that the captured image is to be compressed in the first compression mode when an external device having a second display unit different from the first display unit is not connected to the output interface while supplying the first expanded image generated by the decoder to the first display unit. And the mode switching circuit instructs the encoder that the captured image is to be compressed in the second compression mode when the external device is connected to the output interface while supplying the second expanded image generated by the decoder to the first display unit via the output interface.

In this invention, the sending circuit may send, when it sends the compressed image in the second compression mode, the compressed image in the second compression mode in a lower frame rate than that when it sends the compressed image in the first compression mode. And the first display unit may have a display size corresponding to the resolution of the first compression mode. In this case, the second display unit may have a display size enabling display at a higher resolution than the first display unit.

According to the above invention, it is detected on the side of a receiver whether an external device is connected to an output interface, to switch a compression mode of a captured image on the side of a transmitter in response to the detection. More specifically, compression and transmission at a low resolution that match a display specification of the receiver itself when the external device is not connected, while compression and transmission at a high resolution enabling display with a display specification of the external device when the external device is connected. This enables image display that matches a display environment having a high resolution without being restricted by the display specification of the receiver itself and without degrading real time properties of the display at a high resolution. This also enables the lack of a transmission bandwidth to be suppressed by switching the compression mode on the side of not the receiver but the transmitter.

### BRIEF DESCRIPTION OF THE DRAWINGS

Fig. 1 is a block diagram of an image transmission system;
Fig. 2 is a schematic view illustrating operations in a QVGA mode;and
Fig. 3 is a schematic view illustrating operations in a VGA mode.

### DESCRIPTION OF THE PREFERRED EMBODIMENTS

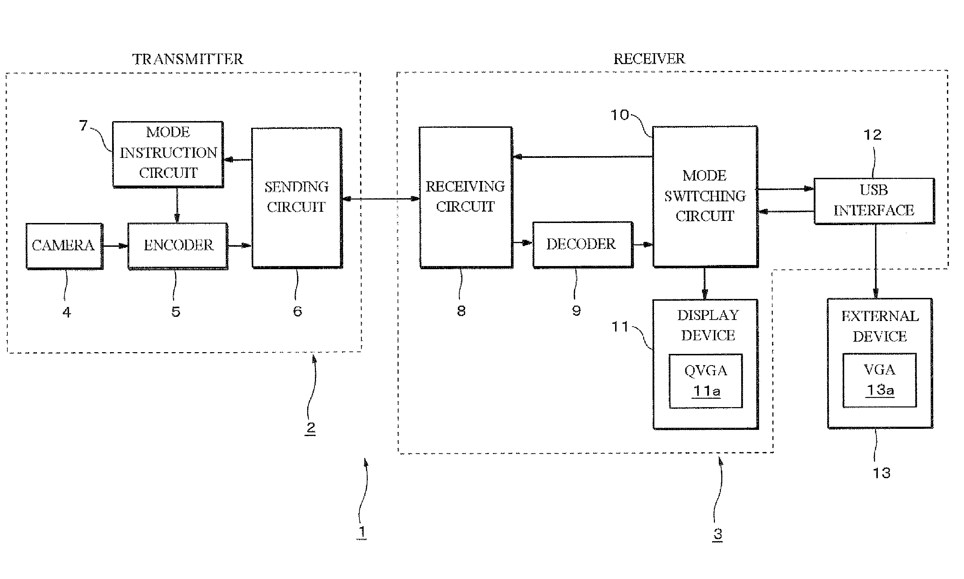

Fig. 1 is a block diagram of an image transmission system according to the present embodiment. The image transmission system 1 includes a transmitter 2 and a receiver 3 that perform two-way radio communication. Examples of the image transfer system 1 include a baby monitor capable of displaying an image of an infant captured by a camera 4 on the side of the transmitter 2 on a display device 11 or the like on the side of the receiver 3 so that the infant can be managed if at a distant place. Digital communication conforming to IEEE (Institute of Electrical and Electronics Engineers) 802.11b using an Industry Science Medical (ISM) band in the vicinity of 2.4 GHz, for example, can be used as a data communication method between the transmitter 2 and the receiver 3. Various types of sensors such as a microphone and a temperature sensor may be provided side by side on the side of the transmitter 2, although omitted because the present embodiment is characterized by compression and transmission of an image. In this case, information relating to the sensors are transmitted toward the receiver 3.

The transmitter 2 mainly includes the camera 4, an encoder 5, a sending circuit 6, and a mode instruction circuit 7. The camera 4 has approximately 300.000 pixels, for example, and outputs captured images of an infant to be a monitoring object (corresponding to a Video Graphics Array (VGA)) in a time-series order. The encoder 5 sequentially compresses the time-series captured images, i.e., moving images output from the camera 4. A method for compressing a moving image includes any method, e.g., H.264 serving as a moving image compression standard for efficiently transmitting a moving image in a small data amount. The encoder 5 compresses the images in either one of a Quarter Video Graphics Array (QVGA) mode lower than the original specification of the camera 4 and a VGA mode corresponding to the original specification of the camera 4 as a compression mode. In the QVGA mode, the image from the camera 4 is compressed into a QVGA size (320 × 240 = 76800 pixels). In the VGA mode, the image from the camera 4 is compressed into a VGA size (640 × 480 = 307200 pixels) having a higher resolution than the QVGA size. The compression mode in the encoder 5 is selected based on an instruction from the mode instruction circuit 7. However, the QVGA mode is generally selected. The sending circuit 6 sequentially sends the images compressed by the encoder 5 in a time-series manner. The compressed image is transmitted by making a frame rate variable according to the compression mode applied to the compressed image to be transmitted.

On the other hand, the receiver 3 mainly includes a receiving circuit 8, a decoder 9, a mode switching circuit 10, the display device 11, and a Universal Serial Bus (USB) interface 12 serving as an output interface. The receiving circuit 8 sequentially receives the compressed images sent from the sending circuit 6 in a time-series manner. The decoder 9 expands the compressed image received by the receiving circuit 8. When the compressed image is compressed in the QVGA mode, an expanded image of the QVGA size (hereinafter referred to as a "QVGA expanded image") is generated from the compressed image. On the other hand, when the compressed image is compressed in the VGA mode, an expanded image of the VGA size (hereinafter referred to as a "VGA expanded image") is generated from the compressed image. The mode switching circuit 10 selectively outputs the expanded image from the decoder 9 to either one of the display device 11 and the USB interface 12. More specifically, the QVGA expanded image is output to the display device 11, and the VGA expanded image is output to the USB interface 12. The mode switching circuit 10 detects whether an external device 13 is connected to the USB interface 12, and instructs the mode instruction circuit 7 to designate either one of the QVGA mode and the VGA mode as the compression mode to the mode instruction circuit 7 via the sending and receiving circuits 6 and 8 depending on its detection result. The mode instruction circuit 7 that has received the instruction instructs the encoder 5 to perform compression in the designated compression mode.

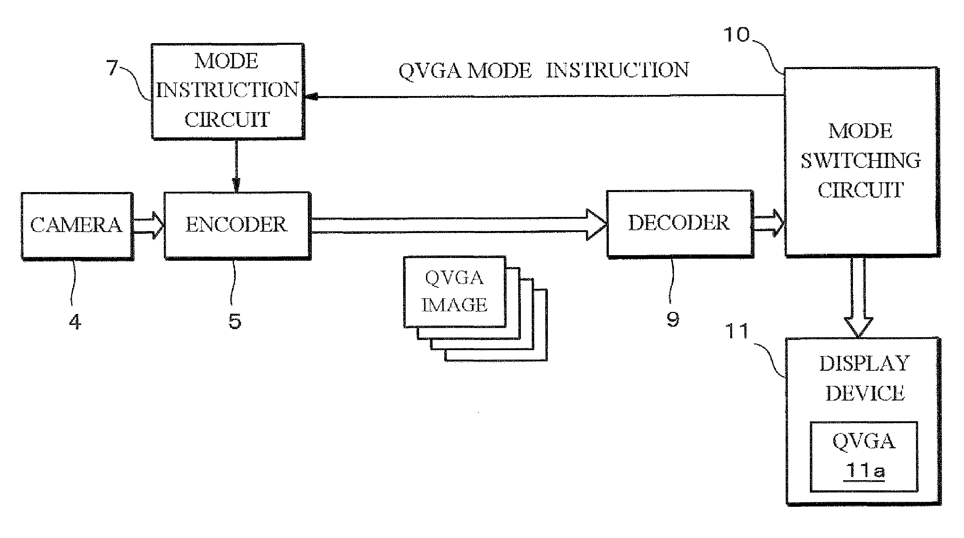

Fig. 2 is a schematic view illustrating operations in the QVGA mode. When the external device 13 is not connected to the USB interface 12 (at the time of USB non-connection), compression and transmission at a low resolution that match a display specification of the receiver 3 itself are performed, so that an image is displayed on a QVGA display unit 11a in real time. In this case, the mode switching circuit 10 selects the QVGA mode as the compression mode, and instructs the mode instruction circuit 7 that the QVGA mode is selected as the compression mode via the sending and receiving circuits 6 and 8. The mode instruction circuit 7 that has received the instruction instructs the encoder 5 to compress the captured image in the QVGA mode. This causes the image from the camera 4 to be compressed in the QVGA mode while being sent from the sending circuit 6 in a frame rate of a maximum of 25 fps, for example. The QVGA expanded image generated via the receiving circuit 8 and the decoder 9 is input to the mode switching circuit 10. When the QVGA expanded image is input from the decoder 9, the mode switching circuit 10 selects the display device 11 included in the receiver 3 itself as an output destination, and supplies the QVGA expanded image thereto. This causes the QVGA expanded image to be displayed on the QVGA display unit 11a in the display device 11. The QVGA display unit 11a has a relatively small display size (e.g., approximately 24 inches) corresponding to the resolution of the QVGA mode.

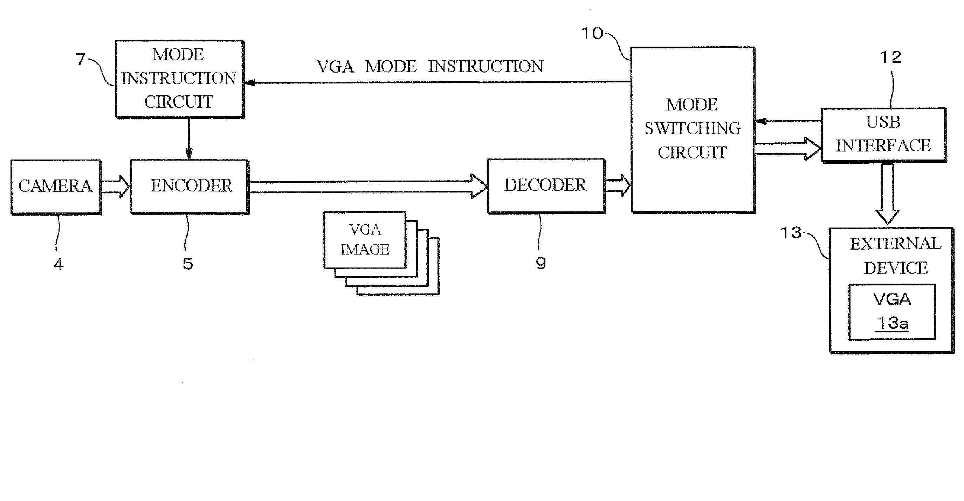

Fig. 3 is a schematic view illustrating operations in the VGA mode. When the external device 13 is connected to the USB interface 12 (at the time of USB connection), compression and transmission at a high resolution that match a display specification of the external device 13 are performed, so that an image is displayed on a VGA display unit 13a that differs from the QVGA display unit 11a in real time. A typical example of the external device 13 includes a personal computer having an image display application linked to the image transmission system 1 installed therein and including a VGA display unit 13a capable of display at a higher resolution than the QVGA display unit 11a. The display size of the VGA display unit 13a need not correspond to the resolution of the VGA mode itself, and may be the resolution of the VGA mode or more. In this case, the mode switching circuit 10 selects the VGA mode as the compression mode, and instructs the mode instruction circuit 7 that the VGA mode is selected via the sending and receiving circuits 6 and 8. The mode instruction circuit 7 that has received the instruction instructs the encoder 5 to compress the captured image in the VGA mode. This causes the image from the camera 4 to be compressed in the VGA mode while being sent in a lower frame rate than that when the compressed image in the QVGA mode is sent. The frame rate is reduced to suppress the lack of the transmission bandwidth caused by the increase in the data size of the compressed image. The frame rate in this case can be a maximum of 18 fps, for example. The VGA expanded image generated via the receiving circuit 8 and the decoder 9 is input to the mode switching circuit 10. When the VGA expanded image is input from the decoder 9, the mode switching circuit 10 selects the USB interface 12 to which the external device 13 is connected as an output destination, and supplies the VGA expanded image thereto. This causes the VGA expanded image to be output outward from the USB interface 12 and causes the VGA expanded image to be displayed on the VGA display unit 13a in the external device 13. An image to be displayed on the VGA display unit 13a has a size that is four times that of the image displayed on the QVGA display unit 11a without degrading its image quality.

According to the present embodiment, it is detected on the side of the receiver 3 whether the external device 13 is connected to the USB interface 12, to switch a display destination to either one of the QVGA display unit 11a and the VGA display unit 13a. Compression and transmission at a low resolution that match the display specification of the receiver 3 itself when the external device 13 is not connected to the USB interface 12, while compression and transmission at a high resolution enabling display in the display specification of the external device 13 when the external device 13 is connected to the USB interface 12. This can result in image display in a display environment having a high resolution without being restricted by the display specification of the receiver 3 that is small in size because it attaches importance to portability and without degrading real time properties of the display at a high resolution. The lack of the transmission bandwidth can be suppressed by switching the compression mode on the side of not the receiver 3 but the transmitter 2.

According to the present embodiment, the lack of the transmission bandwidth can be more effectively suppressed by switching the frame rate in transmitting the compressed image according to the compression mode and reducing the frame rate during transmission of the compressed image having a high resolution.

Although in the above-mentioned embodiment, the QVGA mode and the VGA mode have been described as examples of the compression mode, the present invention is not limited to the same. The present invention is widely applicable to a plurality of any models that differ in resolutions.

As described above, the present invention is widely applicable to an image transmission system in which an image captured on the side of a transmitter is displayed on the side of a receiver in real time, for example, a baby monitor and an interphone.

### DESCRIPTION OF SYMBOLS

- 1: IMAGE TRANSMISSION SYSTEM
- 2: TRANSMITTER
- 3: RECEIVER
- 4: CAMERA
- 5: ENCODER
- 6: SENDING CIRCUIT
- 7: MODE INSTRUCTION CIRCUIT
- 8: RECEIVING CIRCUIT
- 9: DECODER
- 10: MODE SWITCHING CIRCUIT
- 11: DISPLAY DEVICE
- 11a: QVGA DISPLAY UNIT
- 12: USB INTERFACE
- 13: EXTERNAL DEVICE
- 13a: VGA DISPLAY UNIT

## Claims

1. An image transmission system comprising:
a camera outputting a captured image in a time-series order;
an encoder compressing the captured image output from the camera in either one of a first compression mode and a second compression mode having a higher resolution than that of the first compression mode;
a sending circuit sending the image compressed by the encoder;
a receiving circuit receiving the compressed image sent from the sending circuit;
a decoder expanding the compressed image received by the receiving circuit, and generating a first expanded image from the compressed image in the first compression mode while generating a second expanded image higher in resolution than the first expanded image from the compressed image in the second compression mode
a first display unit displaying the first expanded image;
an output interface outputting the second expanded image outward; and
a mode switching circuit instructing the encoder that the captured image is to be compressed in the first compression mode when an external device having a second display unit different from the first display unit is not connected to the output interface while supplying the first expanded image generated by the decoder to the first display unit, and instructing the encoder that the captured image is to be compressed in the second compression mode when the external device is connected to the output interface while supplying the second expanded image generated by the decoder to the first display unit via the output interface.

2. The image transmission system according to claim 1, wherein the sending circuit sends, when it sends the compressed image in the second compression mode, the compressed image in the second compression mode in a lower frame rate than that when it sends the compressed image in the first compression mode.

3. The image transmission system according to claim 1 or 2, wherein the first display unit has a display size corresponding to the resolution of the first compression mode.

4. The image transmission system according to claim 3, wherein the second display unit has a display size enabling display at a higher resolution than the first display unit.
